# EUROPÄISCHE PATENTSCHRIFT

(11) **EP 2 586 598 B1**
(45) Veröffentlichungstag und Bekanntmachung des Hinweises auf die Patenterteilung: **28.12.2016**
(21) Anmeldenummer: 12186962.2
(22) Anmeldetag: 02.10.2012
(51) Int. Cl.: B29C 70/08, B29C 70/74, B29C 70/78, B62D 29/00, B29L 31/30, B29K 105/08

(54) **VERFAHREN ZUR HERSTELLUNG EINES KRAFTFAHRZEUGBAUTEILS**
METHOD FOR MANUFACTURING A MOTOR VEHICLE COMPONENT
PROCÉDÉ DE FABRICATION D'UN COMPOSANT DE VÉHICULE AUTOMOBILE

(30) Priorität: 28.10.2011 DE 102011054909
(43) Veröffentlichungstag der Anmeldung: 01.05.2013
(73) Patentinhaber: Benteler Automobiltechnik GmbH, 33102 Paderborn (DE)
(72) Erfinder: Brockhoff, Franz Ulrich, 59565 Bramsche (DE); Grottke, Stefan, 48431 Rheine (DE); Schmitz, Stefan, 33739 Bielefeld (DE); Diersmann, Holger, 49492 Westerkappeln (DE)
(74) Vertreter: Ksoll, Peter

(56) Entgegenhaltungen:
- EP-A2- 0 170 819
- DE-A1-102006 058 601
- F. C. Campbell: "Surface preparation" In: "Surface preparation", 1. Januar 2004 (2004-01-01), Elsevier, XP055052554, ISBN: 978-1-85-617415-2 Seiten 251-258, * Seite 254 - Seite 258 *

## Beschreibung

Die vorliegende Erfindung betrifft ein Verfahren zur Herstellung eines Kraftfahrzeugbauteils gemäß den Merkmalen im Patentanspruch 1.

In der Kraftfahrzeugindustrie gibt es heutzutage durch gesetzliche Anforderungen sowie durch Herstellervorgaben das Bestreben, möglichst kraftstoffsparende Automobile herzustellen. Zum einen wird hierdurch der Umgang mit fossilen Brennstoffen schonend eingeschränkt, zum anderen werden durch die Verbrennung von weniger Kraftstoffen die Umweltbelastungen reduziert.

Zur Kraftstoffeinsparung gibt es im Stand der Technik verschiedene Ansätze, beispielsweise in der Entwicklung von leistungsfähigeren Verbrennungskraftmaschinen mit besserem Wirkungsgrad.

Ein weiteres Konzept ist die Umsetzung des konsequenten Leichtbaus bei allen Kraftfahrzeugbauteilen sowie der Kraftfahrzeugkarosserie selber. Auch hier gibt es wiederum verschiedene aus dem Stand der Technik bekannte Ansätze, beispielsweise die Herstellung einer Kraftfahrzeugkarosserie aus hochfesten bzw. höchstfesten Stählen oder aber aus Leichtmetall. Hierdurch lassen sich Gewichtseinsparungspotenziale von bis zu mehreren Dutzend Kilogramm an einer selbsttragenden Kraftfahrzeugkarosserie realisieren.

Durch konsequente Weiterentwicklung in der Prozessautomatisierung zur Herstellung von Faserverbundwerkstoffbauteilen sind auch Faserverbundwerkstoffbauteile für Volumenmodelle interessant geworden. Bei den Faserwerkstoffen werden beispielsweise Karbonfasern, Glasfasern, Basaltfasern, Aramitfasern, Stahlfasern oder ähnliche Faserwerkstoffe verwendet. Diese werden mit Harz beaufschlagt und in einem Umformwerkzeug zu den gewünschten Bauteilen bzw. Bauteilkomponenten umgeformt und ausgehärtet. Faserverbundwerkstoffbauteile weisen gegenüber vergleichbaren metallischen Bauteilen eine höhere Stabilität, bei gleichzeitig geringerem spezifischen Eigengewicht, auf.

Im Falle eines Fahrzeug-Crashes sind die Faserverbundwerkstoffbauteile im Gegensatz zu metallischen Bauteilen zunächst durch ihre höhere Stabilität resistenter und bieten daher eine gute Möglichkeit der Crashenergieabsorption. Kommt es jedoch zu einem Reißen einzelner Fasern innerhalb des Faserverbundwerkstoffes, so sinken die Crasheigenschaften abrupt deutlich unter die von vergleichbaren metallischen Bauteilen.

Aus der DE 199 56 394 A1 ist ein Verfahren zur Herstellung eines Profils aus einem Hybridwerkstoff bekannt, wobei aus abwechselnden Schichten eines vorimprägnierten Fasertextils und Metallblechen ein Hybridwerkstoffstapel erzeugt wird. Nach dem Stapeln wird der Werkstoff umgeformt und schließlich in einem Autoklaven unter Beaufschlagung von Druck und Temperatur ausgehärtet. Die Herstellung und das Umformen eines solchen Hybridmaterials ist aufgrund des hohen Metallanteils der Metallbleche sehr aufwändig. Darüber hinaus gestaltet sich die Positionierung des nicht ausgehärteten und somit noch feuchten bzw. rutschigen Rohwerkstoffes im Aushärtewerkzeug als schwierig. Durch den schichtweisen Aufbau aus Faserverbundwerkstoff in Verbindung mit metallischen Lagen ist das Gewichtseinsparungspotenzial gegenüber einem herkömmlich metallischen Bauteil nur gering.

Auch ist aus der DE 10 2006 058 601 A1 ein Herstellungsverfahren für ein warmumgeformtes und pressgehärtetes Metallbauteil mit einem Faserverstärkungsteil bekannt. Ferner ist aus der EP 0 170 819 A2 ein Herstellungsverfahren für ein Kraftfahrzeugbauteil bekannt, wobei ein metallisches Bauteil kalt umgeformt wird und anschließend vollflächig mit einem Faserverbundwerkstoff gekoppelt wird.

Aufgabe der vorliegenden Erfindung ist es daher, ein Verfahren zur Herstellung eines Faserverbundwerkstoffbauteils bereitzustellen, das gegenüber aus dem Stand der Technik bekannten Verfahren besonders einfach durchzuführen ist. Aufgabe der vorliegenden Erfindung ist es weiterhin, ein Faserverbundwerkstoffbauteil bereitzustellen, das einfach und kostengünstig herstellbar ist und gegenüber aus dem Stand der Technik bekannten Faserverbundwerkstoffbauteilen ein geringeres Gewicht und/oder verbesserte Crash-Eigenschaften aufweist.

Die vorliegende Aufgabe wird erfindungsgemäß mit einem Verfahren zur Herstellung eines Kraftfahrzeughybridbauteils gemäß dem Patentanspruch 1 gelöst.

Vorteilhafte Ausführungsvarianten der vorliegenden Erfindung sind Bestandteil der abhängigen Patentansprüche.

Das Verfahren zur Herstellung eines Kraftfahrzeughybridbauteils mit einem metallischen Grundkörper und einem Verstärkungspatch aus Faserverbundwerkstoff ist gekennzeichnet durch folgende Verfahrensschritte:
- Herstellen des Grundkörper als dreidimensional ausgeformtes, warmumgeformtes und pressgehärtetes Kraftfahrzeugbauteil,
- Bereitstellen mindestens einer Lage Faserwerkstoff, vorzugsweise Bereitstellen von zwei, insbesondere drei oder mehr Lagen Faserwerkstoff, welche übereinander gestapelt werden, wobei die Lagen mit Harz vorimprägniert sind und/oder mit einem Harz beaufschlagt werden,
- Einlegen des Faserverbundwerkstoffstapels in das Kraftfahrzeugbauteil,
- Anformen des Faserverbundwerkstoffes in das Kraftfahrzeugbauteil zur Herstellung des Kraftfahrzeughybridbauteils, wobei eine Restwärme des Kraftfahrzeugbauteils zur Aushärtung des Verstärkungspatches genutzt wird, so dass der Faserverbundwerkstoff aushärtet,
- Zumindest abschnittsweises Aufbringen einer metallischen Lage auf eine Faserlage vor und/oder während und/oder nach dem Anformen, wobei die metallische Lage auf der dem Kraftfahrzeugbauteil gegenüberliegenden Seite des Verstärkungspatches angeordnet und mit dem Faserverbundwerkstoff verpresst wird.

Bei dem Kraftfahrzeughybridbauteil ist das metallische Bauteil vorzugsweise aus einer Leichtmetalllegierung oder aber auch einer Stahllegierung ausgebildet. Zur lokalen Verstärkung wird es durch Aufbringen des Faserwerkstoffes derart ausgebildet, dass es bei nur geringer Erhöhung des Gewichtes eine deutliche Steigerung der Festigkeit erfährt. Der Faserverbundwerkstoff wird dabei mit der Intension auf das metallische Kraftfahrzeugbauteil aufgebracht, um die überwiegend tragende Struktur derart zu stützen, dass erstes lokales Versagen erst bei größeren Belastungen auftritt.

Durch den mehrlagigen Aufbau des Faserverbundwerkstoffes selber wird ein Ausknicken und/oder Ausbeulen noch weiter hinausgezögert als mit einem einfachen Patch aus einem einlagigen Faserverbundwerkstoff. Um jedoch die Vorteile eines mehrlagigen Aufbaus, beispielsweise in Form einer Sandwichstruktur, bei möglichst geringem Herstellungsaufwand nutzen zu können, wird im Bereich der höchsten auftretenden Belastungen eine zusätzliche metallische Lage auf die Faserverbundwerkstoffverstärkung aufgebracht. Die zusätzliche metallische Lage wird vor und/oder während und/oder nach dem Anformen des Faserverbundwerkstoffes an den Grundkörper, also das dreidimensional geformte Kraftfahrzeugbauteil, aufgebracht.

Die metallische Lage erhält zunächst einen den Belastungen entsprechenden Zuschnitt, sie erstreckt sich also über den Bereich mit den höchsten Spannungskonzentrationen, und wird als ebene Blechplatine auf die Faserverbundwerkstofflagen und/oder den Faserverbundwerkstoffpatch aufgebracht. Die metallische Lage ist dabei in ihrer Wanddicke derart nachgiebig gewählt, dass sie insbesondere in dem Herstellungsverfahren durch den Anformstempel und/oder Pressenstempel des Faserverbundwerkstoffes mit an die tragende Struktur des Kraftfahrzeugbauteils angeformt wird. Hierdurch erfolgt dann die dreidimensionale Formgebung, sowohl des Verstärkungspatches als auch der metallischen Lage. In einem anschließenden Aushärteprozess des Faserverbundwerkstoffes wird dann eine stoffschlüssige Verbindung, insbesondere Klebeverbindung, zwischen dem Verstärkungspatch und der metallischen Lage hergestellt.

Durch das Aufbringen der metallischen Lage auf den Verstärkungspatch ist mit nur geringem Mehraufwand in dem Fertigungsprozess eine deutliche Steigerung des Crashenergieabsorptionsvermögens und/oder Festigkeitseigenschaften des Kraftfahrzeughybridbauteils möglich. In Relation zu einer aufwändigen Sandwichkonstruktion des Verstärkungspatches selber ist der Fertigungsaufwand mitunter sogar geringer. Das hergestellte Kraftfahrzeughybridbauteil lässt sich somit kostengünstiger als mit herkömmlichen aus dem Stand der Technik bekannten Herstellungsverfahren produzieren und weist bei annähernd gleichem spezifischen Bauteilgewicht eine deutlich höhere Festigkeit auf.

Im Rahmen der Erfindung wird weiterhin bevorzugt eine metallische Lage aus einem Leichtmetall verwendet. Im Rahmen der Erfindung ist es jedoch auch möglich, eine metallische Lage aus einem metallischen Werkstoff zu verwenden. Ferner wird die metallische Lage in Form eines Blechzuschnittes verwendet.

Die metallische Lage wird weiterhin bevorzugt als abschließende Lage auf die Faserwerkstofflagen des Verstärkungspatches aufgebracht. Besonders bevorzugt wird die metallische Lage vor oder nach dem Anformen der Faserwerkstofflagen an das Kraftfahrzeugbauteil aufgebracht. Bei dem Aufbringen der metallischen Lage vor dem Anformen der Faserwerkstofflagen besteht insbesondere der Vorteil, dass durch den Anformvorgang selber aus der Faserwerkstofflage ein überschüssiges Harz austritt. Das austretende Harz kann im Rahmen der Erfindung dazu genutzt werden, die metallische Lage mit dem Faserverbundwerkstoff zu verkleben. Während eines nachgeschalteten Aushärtevorganges des Faserverbundwerkstoffes selber härtet somit auch die zwischen der metallischen Lage und dem Faserverbundwerkstoff hergestellte Klebeverbindung aus. Der Aufwand zur Produktion des erfindungsgemäßen Kraftfahrzeughybridbauteils wird dabei ausschließlich auf das zusätzliche Aufbringen der metallischen Lage beschränkt. Ein aufwändiger Produktionsprozess durch eine mehrlagige Sandwichstruktur entfällt.

Im Rahmen der Erfindung ist es weiterhin vorstellbar, dass die metallische Lage von einer weiteren Faserwerkstofflage überdeckt wird. Hierdurch wird ein sicheres Vernetzen der metallischen Lage mit den die metallische Lage umgebenden Faserwerkstofflagen durch das beidseitig austretende Harz sichergestellt. Weiterhin wird durch die weitere, die metallische Lage überdeckende Faserwerkstofflage ein Korrosionsschutz sichergestellt. Durch den Korrosionsschutz wird verhindert, dass eine Festigkeitsbeeinflussung des Kraftfahrzeughybridbauteils auch nach jahrelangem Einsatz nicht eintritt.

Im Rahmen der Erfindung wird weiterhin besonders bevorzugt die metallische Lage mit dem Faserverbundwerkstoff verpresst. Weiter bevorzugt wird der Faserverbundwerkstoff durch die metallische Lage mit dem Kraftfahrzeugbauteil verpresst. Auch hierdurch wird sichergestellt, dass eine homogene Klebeschichtverbindung zwischen den einzelnen Lagen ausgebildet wird, so dass bei Einhaltung einer hohen Produktionsgenauigkeit eine fehlerhafte Klebeverbindung auszuschließen ist.

Im Rahmen der Erfindung ist es weiterhin vorstellbar, dass das Kraftfahrzeugbauteil selber als warmumgeformtes, pressgehärtetes Bauteil hergestellt wird und eine Restwärme des Kraftfahrzeugbauteils zur Aushärtung des Verstärkungspatches genutzt wird, oder dass das Kraftfahrzeugbauteil mit dem Verstärkungspatch erwärmt wird, so dass der Faserverbundwerkstoff aushärtet. Durch den Wärmeeintrag wird ein schnelleres Aushärten des Verstärkungspatches sichergestellt. Im Rahmen der Erfindung ist es ebenfalls inbegriffen, dass die metallische Lage durch den Wärmeeintrag aushärtet. Hierdurch werden kürzere Aushärtungszeiten erreicht, so dass ein nachträgliches Verschieben, auch unter Einhaltung einer kurzen Taktzeit, während des Herstellungsverfahrens vermieden wird.

In einer weiteren vorteilhaften Ausführungsvariante der vorliegenden Erfindung wird zunächst das Verstärkungspatch mit dem Kraftfahrzeugbauteil hergestellt und ausgehärtet. Anschließend wird die metallische Lage auf den Verstärkungspatch aufgeklebt. Je nach Anwendung bzw. Komplexität der herzustellenden Form ist es sinnvoll, zusätzlichen Klebstoff zwischen die metallische Lage und den Verstärkungspatch aufzubringen. Beispielsweise kann hier durch den Klebstoff selber ein eventueller Höhenunterschied bzw. Unebenheiten ausgeglichen werden, so dass eine homogene Verbindung zwischen metallischer Lage und Verstärkungspatch hergestellt wird.

Die metallische Lage kann im Rahmen der Erfindung zusätzlich mit einem Korrosionsschutz behandelt werden. Auch hierdurch wird sichergestellt, dass während der gesamten Verwendung des Kraftfahrzeugbauteils, also über die Verwendungsdauer des Kraftfahrzeugs hinweg, die Crash-Eigenschaften nicht durch Korrosion an der metallischen Lage beeinflusst werden.

Insbesondere wird im Rahmen der Erfindung eine metallische Lage verwendet, die eine Wandstärke zwischen 0,1 mm und 4 mm, besonders bevorzugt zwischen 0,2 mm und 2,1 mm aufweist. Als besonders bevorzugt haben sich metallische Lagen erwiesen, die eine Blechstärke von 0,6 mm, 1,0 mm bzw. 2,0 mm aufweisen. Die metallische Lage bildet somit ein Optimum zwischen dreidimensionaler Formgebungsmöglichkeit, marginaler Erhöhung des spezifischen Eigengewichtes des Kraftfahrzeughybridbauteils und hierauf bezogener maximaler Erhöhung der Bauteilfestigkeit.

Durch das erfindungsgemäße Verfahren wird insbesondere eine Kraftfahrzeugsäule, ganz besonders bevorzugt eine Kraftfahrzeug-B-Säule hergestellt. Der Verstärkungspatch wird dazu besonders bevorzugt im mittleren und/oder oberen Teil der Kraftfahrzeug-B-Säule eingesetzt.

Mit dem erfindungsgemäßen Verfahren kann ein Kraftfahrzeughybridbauteil hergestellt werden, bestehend aus einem metallischen Grundkörper und einem Verstärkungspatch aus Faserverbundwerkstoff, wobei das Kraftfahrzeughybridbauteil nach einem Verfahren gemäß mindestens einem der zuvor genannten Merkmale hergestellt ist und sich dadurch auszeichnet, dass auf dem Verstärkungspatsch eine metallische Lage bezogen auf eine Kraftfahrzeugkarosserie innenliegend angeordnet ist, wobei das Energieaufnahmevermögen gegenüber herkömmlichen Kraftfahrzeughybridbauteilen um mehr als 5 %, insbesondere mehr als 10 %, besonders bevorzugt mehr als 15 %, erhöht ist und die metallische Lage (10) auf einem Bereich des Kraftfahrzeugbauteils angeordnet ist, an dem im Crashfall die höchste Belastung auftritt.

Durch die erfindungsgemäße aufgebrachte metallische Lage auf dem Verstärkungspatch weist das Kraftfahrzeughybridbauteil ein annähernd gleichbleibendes spezifisches Eigengewicht auf, wobei das Energieaufnahmevermögen, was sich durch das Crashenergieabsorptionsvermögen und die Bauteilsteifigkeit auszeichnet, deutlich erhöht ist. Durch die metallische Lage kommt es erst sehr spät zu einem Reißen der Fasern des Verstärkungspatches. Erfindungsgemäß ist der Verstärkungspatch zumindest in den Bereichen von hohen auftretenden Belastungen von zwei Seiten von einem metallischen Lagenaufbau umgeben.

Auf der einen Seite ist dieser Aufbau das Kraftfahrzeugbauteil selber, auf der anderen Seite die metallische Lage. Hierdurch kann es nicht vorkommen, dass zunächst eine obere Schicht, also eine außenliegende Schicht des Verstärkungspatches reißt, wobei sich der Riss dann auf die darunterliegenden Schichten bzw. Lagen des Faserverbundwerkstoffes fortsetzt. Die metallischen Lagen weisen gegenüber den Faserwerkstofflagen eine deutlich höhere Bruchdehnung auf, weshalb ein Reißen der Faserwerkstofflagen hinausgezögert oder gar vermieden wird.

Die metallische Lage ist, bezogen auf eine Kraftfahrzeugkarosserie, innenliegend an dem Kraftfahrzeughybridbauteil angeordnet. Zum einen bietet dies designtechnische bzw. ästhetische Vorteile, da die metallische Lage von einem Kraftfahrzeugfahrer oder sonstigen Passanten nicht wahrnehmbar ist. Zum anderen ist die metallische Lage aufgrund ihrer mitunter sehr geringen Dicke anfällig gegenüber Stoß-, Kratz- oder Druckbelastungen. Ist die metallische Lage innenliegend, also durch chemisches Einwirken unerreichbar angeordnet, wird eine Beschädigung der metallischen Lage vermieden.

In einer weiteren vorteilhaften Ausführungsvariante der vorliegenden Erfindung ist die metallische Lage vollflächig in Faserwerkstofflagen angeordnet. Hierdurch ist es im Rahmen der Erfindung möglich, das gesamte Bauteilverhalten entsprechend nicht nur an den Bereichen mit örtlich hohen auftretenden Belastungen bzw. Spannungsverläufen zu verstärken, sondern entsprechend vollflächig. Auch hier steigt die Erhöhung des spezifischen Bauteilgewichts nur marginal gegenüber der hierzu antiproportional steigenden Festigkeitssteigerung.

Im Rahmen der Erfindung ist es auch vorstellbar, dass die metallische Lage beidseitig auf den Faserverbundwerkstofflagen angeordnet wird. Im Rahmen der Erfindung bedeutet dies, dass zunächst eine metallische Lage in dem Kraftfahrzeugbauteil angeordnet ist, und dann ein Aufbau aus einer oder mehrerer Faserverbundwerkstofflagen angeordnet ist, und abschließend wiederum eine metallische Lage angeordnet ist. Insbesondere ist es im Rahmen der Erfindung vorstellbar, einen solchen Aufbau bei einem Kraftfahrzeugbauteil aus Leichtmetall zu wählen, wobei die metallischen Lagen jeweils aus einem Stahlwerkstoff ausgebildet sind.

Die metallische Lage ist auf einem Bereich des Kraftfahrzeughybridbauteils angeordnet, in dem bei einem Crashfall die örtlich höchsten Spannungen zu erwarten sind. Spannungsrisse innerhalb des Verstärkungspatches, der aus Faserverbundwerkstoff besteht, werden hierdurch vermieden.

Weitere Vorteile, Merkmale, Eigenschaften und Aspekte der vorliegenden Erfindung sind Bestandteil der folgenden Beschreibung. Bevorzugte Ausführungsformen sind in den schematischen Figuren dargestellt. Diese dienen dem einfachen Verständnis der Erfindung. Es zeigen:
- Fig. 1: zeigt einen Querschnitt durch ein erfindungsgemäß hergestelltes Kraftfahrzeughybridbauteil;
- Fig. 2: ein erfindungsgemäß hergestelltes Kraftfahrzeughybridbauteil in einer Innenansicht;
- Fig. 3a, 3b: einen schematischen Aufbau zwischen Verstärkungspatch und metallischer Lage; und
- Fig.4: ein Kraft-Weg-Diagramm eines Kraftfahrzeughybridbauteils im Vergleich zu einem erfindungsgemäß hergestellten Kraftfahrzeughybridbauteil.

In den Figuren werden für gleiche oder ähnliche Bauteile dieselben Bezugszeichen verwendet, auch wenn eine wiederholte Beschreibung aus Vereinfachungsgründen entfällt.

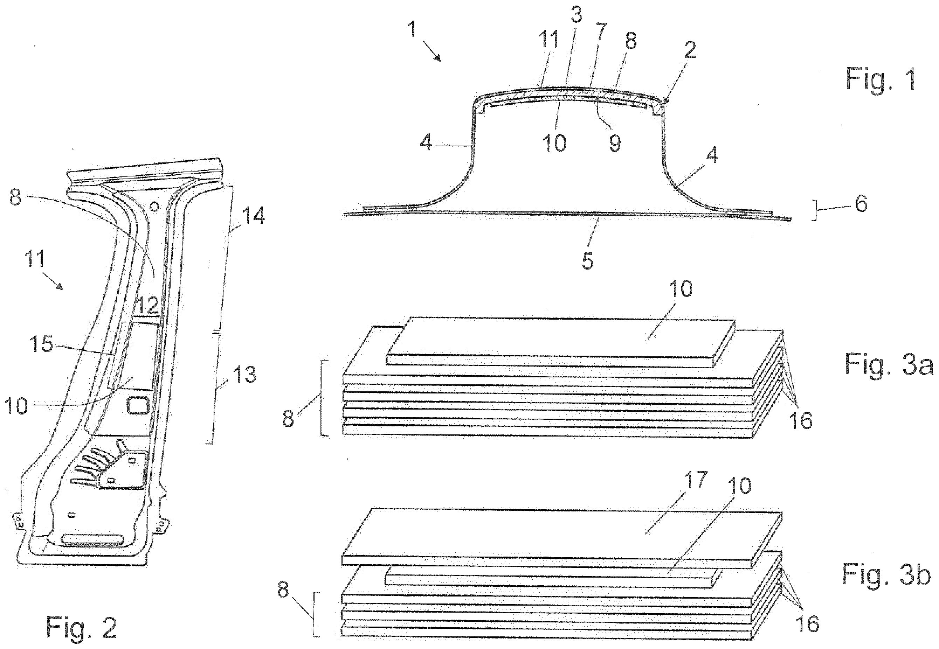

Fig. 1 zeigt ein erfindungsgemäßes Kraftfahrzeughybridbauteil 1 im Querschnitt. Das Kraftfahrzeughybridbauteil 1 ist in Form eines Hutprofils 2 ausgebildet. Das Hutprofil 2 besteht dabei aus einem Grundsteg 3 mit an dem Grundsteg 3 anliegenden Schenkeln 4. Das Kraftfahrzeughybridbauteil 1 ist durch ein Schließblech 5 am Ende des Hutprofils 2 geschlossen. An einer Innenseite 7 des Grundsteges 3 ist ein Verstärkungspatch 8 aus hier nicht näher dargestellten mehreren Faserverbundwerkstofflagen angeordnet. Wiederum an einer Innenseite 9 des Verstärkungspatches 8 ist eine erfindungsgemäße metallische Lage 10 angeordnet.
Der Verstärkungspatch 8 ist somit an einer außenliegenden Seite von dem Grundsteg 3 des Kraftfahrzeughybridbauteils 1 abgeschlossen und an seiner Innenseite 7 durch die metallische Lage 10 als Sandwichbauteil berandet.

Fig. 2 zeigt das erfindungsgemäße Kraftfahrzeughybridbauteil 1 in Form einer B-Säule. Der Verstärkungspatch 8 ist im Innenraum 12 der B-Säule 11 angeordnet, wobei die B-Säule 11 maßgeblich im Querschnitt einen hutprofilartigen Verlauf aufweist. Der Verstärkungspatch 8 ist dabei in der B-Säule 11 in einem mittleren Bereich 13 und in einem oberen Bereich 14 angeordnet. Die metallische Lage 10 ist wiederum nur in einem Abschnitt des mittleren Bereiches 13 aufgebracht. In diesem Abschnitt sind lokal örtlich hohe Spannungsbelastungen, insbesondere im Crash-Fall des Kraftfahrzeuges, zu erwarten.

Fig. 3a und 3b zeigen jeweils einen schematischen Aufbau von einem Verstärkungspatch 8 mit erfindungsgemäßer metallischer Lage 10. In Fig. 3a ist der Verstärkungspatch 8 durch vier Faserwerkstofflagen 16 mit einer abschließenden metallischen Lage 10 dargestellt. In Fig. 3b ist der eigentliche erfindungsgemäße Verstärkungspatch 8 durch drei unten liegende Faserwerkstofflagen 16 mit einer daraufliegenden metallischen Lage 10 dargestellt. Zusätzlich ist eine obere Faserwerkstofflage 17 daran ausgebildet bzw. auf die metallische Lage 10 aufgebracht, so dass eine zusätzliche Verstärkung und ein zusätzlicher Korrosionsschutz gegeben sind. Die einzelnen Faserwerkstofflagen 16 sind über hier nicht näher dargestelltes Harz miteinander gekoppelt. Eventuell den Figurendarstellungen entnehmbare Zwischenräume dienen lediglich der Illustration.

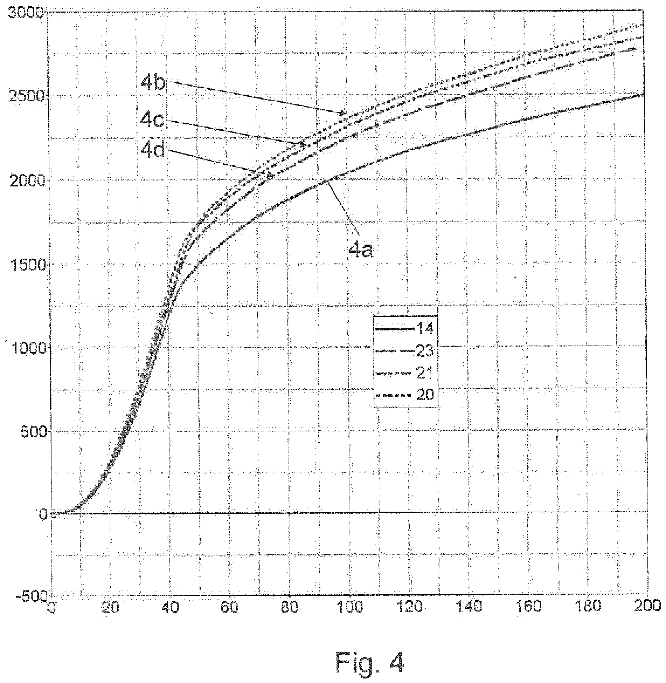

Fig. 4 zeigt ein Kraftdehnungsdiagramm, wobei auf der Abszisse hier eine auf das Bauteil aufgebrachte Kraft dargestellt ist und auf der Ordinate ein entsprechender Verformungsweg. Die Kurve 4a stellt dabei ein herkömmliches Kraftfahrzeughybridbauteil 1, bestehend aus einem metallischen Grundkörper und einem damit verbundenen Verstärkungspatch 8 aus Faserverbundwerkstoff, dar. Die Kurven 4b bis 4d zeigen hier gegenüber das Aufbringen einer zusätzlichen metallischen Lage 10 auf den Verstärkungspatch 8, wobei die zweite metallische Lage 10 eine Wandstärke von 2 mm im Falle von Kurve 4b, eine Wandstärke von 1 mm im Falle von Kurve 4c und eine Wandstärke von 0,6 mm im Falle von Kurve 4d zeigen. Bereits bei dem Aufbringen einer metallischen Lage 10 von 0,6 mm Wandstärke erhöht sich die Bauteilfestigkeit um 10 % gegenüber einem herkömmlich hergestellten Kraftfahrzeughybridbauteil 1 gemäß Kurve 4a.

### Bezugszeichen:

- 1 -: Kraftfahrzeughybridbauteil
- 2 -: Hutprofil
- 3 -: Grundsteg
- 4 -: Schenkel
- 5 -: Schließblech
- 6 -: Ende zu 2
- 7 -: Innenseite zu 3
- 8 -: Verstärkungspatch
- 9 -: Innenseite zu 8
- 10 -: Metallische Lage
- 11 -: B-Säule
- 12 -: Innenraum B-Säule
- 13 -: Mittlerer Bereich zu 11
- 14 -: Oberer Bereich zu 11
- 15 -: Abschnitt zu 13
- 16 -: Faserwerkstofflage
- 17 -: Obere Faserwerkstofflage

## Patentansprüche

1. Verfahren zur Herstellung eines Kraftfahrzeughybridbauteils (1) mit einem metallischen Grundkörper und einem Verstärkungspatch (8) aus Faserverbundwerkstoff, **gekennzeichnet, durch** folgende Verfahrensschritte:
- Herstellen des Grundkörper als dreidimensional ausgeformtes, warmumgeformtes und pressgehärtetes Kraftfahrzeugbauteil,
- Bereitstellen mindestens einer Lage Faserwerkstoff (16), vorzugsweise Bereitstellen von zwei, insbesondere drei oder mehr Lagen Faserwerkstoff (16), welche übereinander gestapelt werden, wobei die Lagen mit Harz vorimprägniert sind und/oder mit einem Harz beaufschlagt werden,
- Einlegen des Faserverbundwerkstoffstapels in das Kraftfahrzeugbauteil,
- Anformen des Faserverbundwerkstoffes in das Kraftfahrzeugbauteil zur Herstellung des Kraftfahrzeughybridbauteils (1), wobei eine Restwärme des Kraftfahrzeugbauteils zur Aushärtung des Verstärkungspatches (8) genutzt wird, so dass der Faserverbundwerkstoff aushärtet,
- Zumindest abschnittsweises Aufbringen einer metallischen Lage (10) auf eine Faserlage (16) vor und/oder während und/oder nach dem Anformen, wobei die metallische Lage (10) auf der dem Kraftfahrzeugbauteil gegenüberliegenden Seite des Verstärkungspatches (8) angeordnet und mit dem Faserverbundwerkstoff verpresst wird.

2. Verfahren nach Anspruch 1, **dadurch gekennzeichnet, dass** eine metallische Lage (10) aus Leichtmetall verwendet wird.

3. Verfahren nach Anspruch 1 oder 2, **dadurch gekennzeichnet, dass** die metallische Lage (10) als abschließende Lage auf die Faserwerkstofflagen (16) aufgebracht wird, vorzugsweise wird die metallische Lage (16) vor oder nach dem Anformen der Faserwerkstofflagen (16) aufgebracht, insbesondere wird die metallische Lage (10) durch das während des Anformvorganges aus dem Faserverbundwerkstoff austretende überschüssige Harz verklebt.

4. Verfahren nach einem der Ansprüche 1 bis 3, **dadurch gekennzeichnet, dass** die metallische Lage (10) von einer weiteren Faserwerkstofflage (17) überdeckt wird.

5. Verfahren nach einem der Ansprüche 1 bis 4, **dadurch gekennzeichnet, dass** die metallische Lage (10) vorbehandelt wird, vorzugsweise mit einem Primer, und/oder insbesondere durch ein Anrauen der Oberfläche.

6. Verfahren nach einem der Ansprüche 1 bis 5, **dadurch gekennzeichnet, dass** zunächst das Verstärkungspatch (8) mit dem Kraftfahrzeugbauteil hergestellt wird und aushärtet und dass die metallische Lage (10) anschließend auf den Verstärkungspatch (8) aufgeklebt wird.

7. Verfahren nach einem der Ansprüche 1 bis 6, **dadurch gekennzeichnet, dass** die metallische Lage (10) mit einem Korrosionsschutz behandelt wird.

8. Verfahren nach einem der Ansprüche 1 bis 7, **dadurch gekennzeichnet, dass** eine metallische Lage (10) verwendet wird, die eine Wandstärke zwischen 0,1 mm und 4,0 mm, besonders bevorzugt zwischen 0,2 mm und 2,1 mm aufweist.

## Claims

1. Method for producing a motor vehicle hybrid component (1) having a metallic basic body and a reinforcement patch (8) made from fibre composite material, **characterised by** the following method steps:
- producing the basic body as a three-dimensionally shaped, hot-formed and press-hardened motor vehicle component,
- providing at least one layer of fibre material (16), preferably providing two, in particular three or more, layers of fibre material (16) which are stacked one over the other, wherein the layers are pre-impregnated with resin and/or are loaded with a resin,
- inserting the fibre composite material stack into the motor vehicle component,
- forming the fibre composite material into the motor vehicle component to produce the motor vehicle hybrid component (1), wherein a residual heat of the motor vehicle component is used for hardening the reinforcement patch (8), such that the fibre composite material hardens,
- applying a metallic layer (10) to a fibre layer (16) at least in sections before and/or during and/or after the forming, wherein the metallic layer (10) is arranged on the side of the reinforcement patch (8) lying opposite the motor vehicle component and is pressed with the fibre composite material.

2. Method according to claim 1, **characterised in that** a metallic layer (10) made from light metal is used.

3. Method according to claim 1 or 2, **characterised in that** the metallic layer (10) is applied to the fibre material layers (16) as a final layer, preferably the metallic layer (16) is applied before or after the forming of the fibre material layers (16), in particular the metallic layer (10) is bonded by the excess resin leaking from the fibre composite material during the forming procedure.

4. Method according to any one of claims 1 to 3, **characterised in that** the metallic layer (10) is covered by a further fibre material layer (17).

5. Method according to any one of claims 1 to 4, **characterised in that** the metallic layer (10) is pretreated, preferably with a primer, and/or in particular by roughening the surface.

6. Method according to any one of claims 1 to 5, **characterised in that** firstly the reinforcement patch (8) is produced with the motor vehicle component and hardened and that the metallic layer (10) is then bonded to the reinforcement patch (8).

7. Method according to any one of claims 1 to 6, **characterised in that** the metallic layer (10) is treated with corrosion protection.

8. Method according to any one of claims 1 to 7, **characterised in that** a metallic layer (10) is used which has a wall thickness between 0.1 mm and 4.0 mm, particularly preferably between 0.2 mm and 2.1 mm.

## Revendications

1. Procédé de fabrication d'un composant hybride (1) de véhicule automobile comprenant un corps de base métallique et une pièce de renfort (8) constituée d'un matériau composite fibreux, **caractérisé par** les étapes de procédé suivantes :
- fabrication du corps de base sous la forme d'un composant de véhicule automobile de formation tridimensionnelle, façonné à chaud et durci sous presse,
- préparation au moins d'une couche de matériau fibreux (16), de préférence préparation de deux, en particulier de trois ou plus de couches de matériau fibreux (16), qui sont empilées l'une sur l'autre, dans lequel les couches sont pré-imprégnées de résine et/ou sont alimentées par une résine,
- insertion de l'empilement de matériau composite fibreux dans le composant de véhicule automobile,
- façonnage du matériau composite fibreux dans le composant de véhicule automobile pour fabriquer le composant hybride (1) de véhicule automobile, dans lequel une chaleur résiduaire du composant de véhicule automobile est utilisée pour durcir la pièce de renfort (8) de sorte que le matériau composite fibreux durcisse,
- application au moins par sections d'une couche métallique (10) sur une couche de fibres (16) avant et/ou pendant et/ou après le façonnage, dans lequel la couche métallique (10) est agencée sur la face de la pièce de renfort (8) en regard du composant de véhicule automobile et est pressée avec le matériau composite fibreux.

2. Procédé selon la revendication 1, **caractérisé en ce qu'**une couche métallique (10) de métal léger est utilisée.

3. Procédé selon la revendication 1 ou 2, **caractérisé en ce que** la couche métallique (10) est appliquée sur les couches de matériau fibreux (16) comme couche de séparation, de préférence, la couche métallique (16) est appliquée avant ou après le façonnage des couches de matériau fibreux (16), en particulier la couche métallique (10) est collée par la résine excédentaire évacuée par le matériau composite fibreux lors de l'opération de façonnage.

4. Procédé selon l'une quelconque des revendications 1 à 3, **caractérisé en ce que** la couche métallique (10) est recouverte par une autre couche de matériau fibreux (17).

5. Procédé selon l'une quelconque des revendications 1 à 4, **caractérisé en ce que** la couche métallique (10) est prétraitée, de préférence avec une couche de fond et/ou en particulier par grattage de la surface.

6. Procédé selon l'une quelconque des revendications 1 à 5, **caractérisé en ce que**, tout d'abord, la pièce de renfort (8) est fabriquée et durcie avec le composant de véhicule automobile et la couche métallique (10) est ensuite collée sur la pièce de renfort (8).

7. Procédé selon l'une quelconque des revendications 1 à 6, **caractérisé en ce que** la couche métallique (10) est traitée avec une protection anticorrosion.

8. Procédé selon l'une quelconque des revendications 1 à 7, **caractérisé en ce qu'**on utilise une couche métallique (10) qui présente une épaisseur de paroi de 0,1 mm à 4,0 mm, tout particulièrement de 0,2 mm à 2,1 mm.
